# DEMANDE DE BREVET EUROPEEN

(11) **EP 1 070 908 A1**
(43) Date de publication de la demande: **24.01.2001**
(21) Numéro de dépôt: 00402076.4
(22) Date de dépôt: 21.07.2000
(51) Int. Cl.: F17C 13/12, F17C 13/04, F16K 31/20, F17C 5/02

(54) **Dispositif de remplissage d'un réservoir de véhicule automobile**

(30) Priorité: 21.07.1999 FR 9909475
(71) Demandeur: Renault, 92100 Boulogne Billancourt (FR)
(72) Inventeur: Simon, Henri, 92500 Rueil Malmaison (FR)

(57) **Abrégé**

Dispositif de remplissage d'un réservoir de carburant d'un véhicule automobile comportant un corps de passage (2), des moyens d'admission et d'arrêt (3, 5, 6, 7, 51, 53) ainsi que des moyens mobiles limiteurs de remplissage (8, 9, 10), caractérisé en ce que lesdits moyens d'admission et d'arrêt (3, 5, 6, 7, 51, 53) comportent un moyen élastique (53) destiné à se déformer pour occuper un moyen de réception (211), situé dans ledit corps de passage (2), lorsque lesdits moyens mobiles limiteurs de remplissage (8, 9), ont atteint une position extrême prédéterminée.

## Description

La présente invention concerne un dispositif de remplissage d'un réservoir de véhicule automobile, et plus particulièrement un dispositif de remplissage d'un réservoir en gaz.

Les dispositifs de remplissage d'un réservoir en gaz connus dans l'état de la technique comportent, de manière générale, une polyvanne jouant à la fois un rôle d'orifice d'admission du gaz mais aussi un rôle de limitation du remplissage, ainsi qu'un rôle d'étanchéité du réservoir.

Les moyens limiteurs de remplissage, portés par la polyvanne, agissent sur les moyens d'admission pour entraîner l'obstruction de l'orifice de remplissage, une fois le réservoir suffisamment plein, afin d'éviter le sur-remplissage de ce dernier et donc les risques de dilatation et, au pire, les risques d'explosion. Ces moyens limiteurs sont prévus pour entrer en action, une fois le réservoir rempli à 80%, de manière générale.

Néanmoins, afin de permettre l'équilibrage des pressions entre la tubulure d'alimentation et l'intérieur du réservoir, les moyens d'admission, en fin de remplissage, n'obstruent pas totalement l'orifice de remplissage et permettent un courant de fuite de l'ordre de 2 l/min. au maximum entre l'intérieur du réservoir et la tubulure d'admission.

Ce courant de fuite évite le bouchage de l'admission de carburant. En effet, sans cet écoulement, les moyens d'admission du gaz viendraient obturer l'orifice de remplissage, attirés par la dépression engendrée à l'intérieur du réservoir.

Cependant, dans les systèmes connus selon l'état de la technique, si l'utilisateur continue de remplir le réservoir, il peut forcer l'action des moyens limiteurs de remplissage sur les moyens d'admission, par l'intermédiaire des moyens ménagés pour permettre le courant de fuite. En effet, ces moyens, qui visent à créer un courant de fuite de l'intérieur du réservoir vers l'extérieur dudit réservoir, ne s'opposent pas, même lorsque les moyens limiteurs de remplissage sont en position correspondant au plein du réservoir, au passage du carburant dans le sens du remplissage.

Ainsi, un utilisateur peut remplir totalement son réservoir, ce qui ne laisse plus de place à l'expansion du gaz à l'intérieur dudit réservoir. De cette manière, on peut craindre une dilatation du réservoir, et, au pire, une explosion.

Le dispositif de remplissage d'un réservoir selon l'invention vise à éliminer cette possibilité de forçage des moyens limiteurs de remplissage et donc à éliminer le risque de sur-remplissage du réservoir et ses conséquences.

L'invention propose dans ce but, un dispositif de remplissage d'un réservoir de carburant d'un véhicule automobile comportant un corps de passage, des moyens d'admission et d'arrêt ainsi que des moyens mobiles limiteurs de remplissage, caractérisé en ce que lesdits moyens d'admission et d'arrêt comportent un moyen élastique destiné à se déformer pour occuper un moyen de réception, situé dans ledit corps de passage, lorsque lesdits moyens mobiles limiteurs de remplissage ont atteint une position extrême prédéterminée.

Selon une caractéristique de l'invention, le corps de passage comporte un orifice d'entrée, une chambre de passage, et un cylindre de sortie, ledit cylindre de sortie possédant des orifices débouchant à l'intérieur dudit réservoir.

Selon une autre caractéristique de l'invention, les moyens d'admission et d'arrêt comportent un piston mobile à l'intérieur du corps de passage.

Selon une autre caractéristique de l'invention, le piston comporte des saignées, lesdites saignées étant destinées à admettre le passage du carburant vers l'intérieur dudit réservoir.

Selon une autre caractéristique de l'invention, les moyens mobiles limiteurs de remplissage comportent un flotteur, destiné à reposer à la surface du carburant à l'intérieur dudit réservoir, et au moins une came, ladite came étant entraînée en rotation par ledit flotteur et coopérant avec les moyens d'admission et d'arrêt.

Selon une autre caractéristique de l'invention, la came possède une forme sensiblement en demi-couronne, les moyens d'admission et d'arrêt étant destinés à coopérer en butée contre ladite came.

Selon une autre caractéristique de l'invention, le moyen élastique comporte un joint en matière déformable, ledit joint étant logé dans les moyens d'admission et d'arrêt.

Selon une autre caractéristique de l'invention, le moyen de réception comporte au moins une rainure de fuite, ladite rainure de fuite étant destinée à admettre le passage du carburant de l'intérieur dudit réservoir vers le milieu extérieur.

Selon une autre caractéristique de l'invention, le moyen élastique s'écrase dans la rainure de fuite, sous la pression de remplissage, lorsque les moyens mobiles limiteurs de remplissage ont atteint une position prédéterminée.

Selon une autre caractéristique de l'invention, sous la pression de remplissage, les moyens d'admission et d'arrêt descendent dans le corps de passage, en comprimant un moyen de rappel, destiné à repousser lesdits moyens d'admission et d'arrêt dans leur position initiale.

D'autres avantages et caractéristiques de l'invention seront mis en évidence dans la description suivante, donnée à titre d'exemple, en référence aux dessins annexés parmi lesquels :
- la figure 1 représente un dispositif de remplissage connu selon l'état de la technique dans une position initiale correspondant au roulage du véhicule.
- la figure 2 représente ce même dispositif dans une position correspondant au remplissage du réservoir du véhicule.
- la figure 3 représente ce même dispositif dans une position correspondant à la fin de remplissage du réservoir.
- la figure 4 représente un dispositif de remplissage selon un exemple de réalisation de l'invention, dans une position initiale correspondant au roulage du véhicule.
- la figure 5 représente ce même dispositif dans une position correspondant au remplissage du réservoir.
- la figure 6 représente ce même dispositif dans une position correspondant à la fin de remplissage du réservoir.
- la figure 7 représente une vue d'un détail de ce même dispositif.
- la figure 8 représente également une vue d'un détail de ce même dispositif.

Dans la description qui va suivre, des références identiques désignent des pièces identiques ou ayant des fonctions similaires.

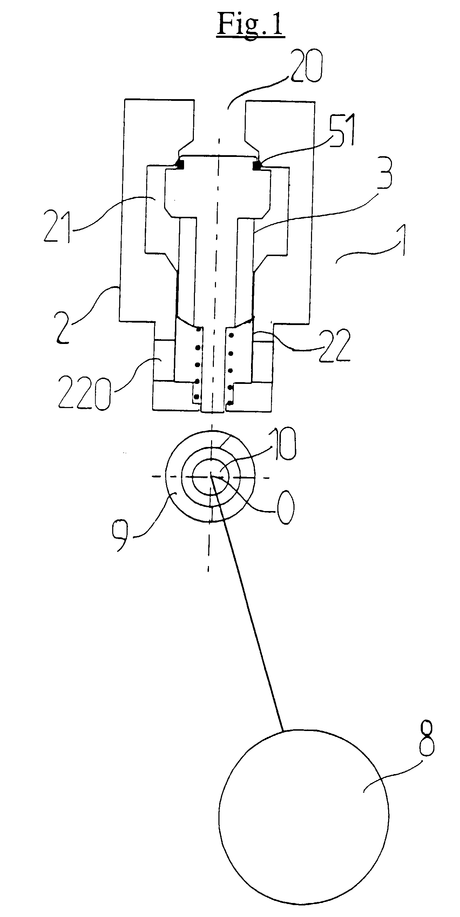

La figure 1 représente un dispositif de remplissage 1 connu selon l'état de la technique, dans une position initiale correspondant au roulage du véhicule.

Ce dispositif comporte un corps 2 dans lequel un piston 3 est mobile selon un axe vertical, ledit piston 3 coopérant avec un ressort 4, lui-même situé à l'intérieur du corps 2.

Le corps 2 possède en partie supérieure un évidemment cylindrique correspondant à l'orifice d'admission 20 du carburant, lors du remplissage d'un réservoir de véhicule automobile, non représenté. Cet orifice d'admission débouche dans une chambre de passage 21, au travers de laquelle le carburant circule vers l'intérieur du réservoir. La chambre de passage 21 se resserre en un cylindre de sortie 22, dont les parois ont une forme sensiblement cylindrique. Les parois en partie basse du cylindre de sortie 22, possèdent des orifices de sortie 220 qui débouchent à l'intérieur du réservoir, non représenté.

Le piston 3 se compose de trois parties qui sont, du haut vers le bas, une tête de piston 5, un corps de piston 6 et un pied de piston 7. La partie supérieure de la tête de piston 5 comporte un rebord annulaire emprisonnant un joint torique 51. Ce joint torique 51 est destiné à venir s'appuyer contre les bords inférieurs de l'orifice d'admission 20, en haut de la chambre de passage 21, lors du roulage du véhicule, comme représenté à la figure 1.

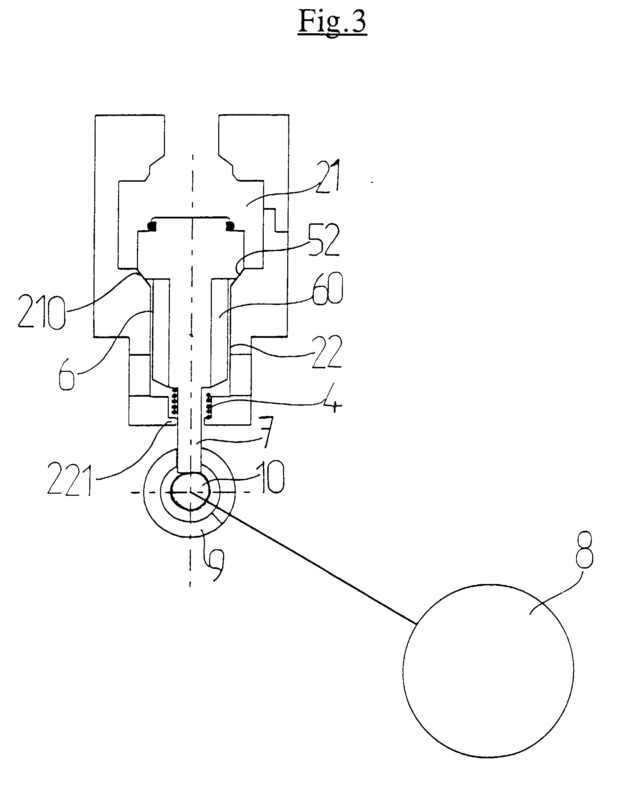

La partie inférieure de la tête de piston 5 comporte un rebord chanfreiné 52. Ce rebord chanfreiné 52 est destiné à coopérer avec un rebord chanfreiné 210, réalisé dans le rebord inférieur de la chambre de passage 21, en haut du cylindre de sortie 22. Les deux rebords chanfreinés 52 et 210 sont alors en liaison cône-cône, comme représenté sur la figure 3, lorsque le plein du réservoir est fait.

Le corps de piston 6, de forme sensiblement cylindrique, est destiné à coulisser selon un axe vertical à l'intérieur du cylindre de sortie 22. Les parois de ce corps de piston 6 possèdent des saignées 60, destinées à laisser passer le carburant vers l'intérieur du réservoir, en phase de remplissage. La partie inférieure du piston 6 se prolonge en un pied de piston 7, ledit pied 7 étant également destiné à coulisser à l'intérieur du cylindre de sortie 22.

La partie inférieure du cylindre de sortie 22 possède un rebord annulaire 221, de telle sorte que le ressort 4, situé autour du pied de piston 7, est en appui, d'une part sur la paroi inférieure du corps de piston 6 et d'autre part sur le rebord annulaire 221 du cylindre de sortie 22. Ce ressort 4 repousse le piston 3, de telle sorte qu'en roulage, comme représenté à la figure 1, le joint torique 51 est en butée contre la paroi inférieure de l'orifice d'admission 20. Le dispositif de remplissage assure ainsi une étanchéité entre l'intérieur du réservoir et le milieu extérieur.

Le dispositif de remplissage selon l'état de la technique comporte également des moyens mobiles limiteurs de remplissage, constitués d'un flotteur 8, lié à une première came mobile 9. Dans l'exemple de réalisation représenté, la première came 9 possède une forme sensiblement en demi-couronne. Le centre de la couronne étant occupé par une seconde came 10. La première came 9 tourne autour d'un axe O, entraînée par le flotteur 8 qui reste toujours à la surface du carburant dans le réservoir.

Comme représenté à la figure 1, en position initiale de roulage, le piston 3, sous l'effet de la poussée du ressort 4, est en position haute dans le corps 2. Le joint torique 51 est alors en appui contre la partie inférieure de l'orifice d'admission 20 et l'extrémité inférieure du pied de piston 7 affleure l'extrémité inférieure du cylindre de sortie 22.

Le joint torique 51 assure l'étanchéité du réservoir vis-à-vis du milieu extérieur et empêche également le carburant de sortir.

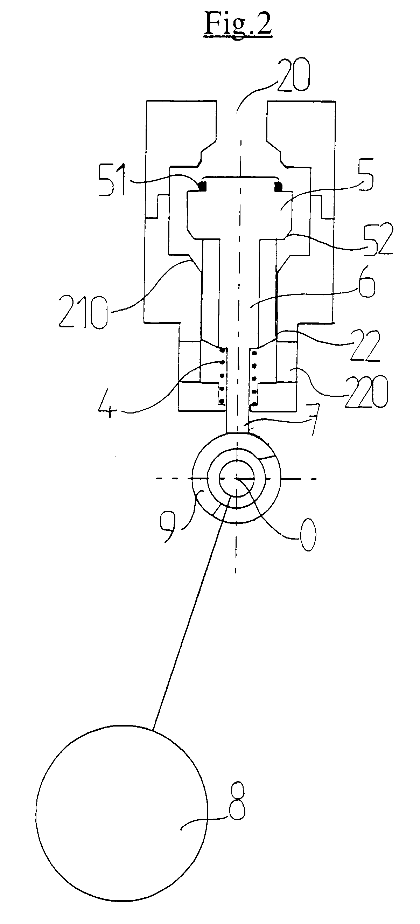

La figure 2 représente le dispositif d'admission selon l'état de la technique lors d'une phase de remplissage du réservoir. L'arrivée du gaz carburant par l'orifice d'admission 20 exerce une pression sur la partie supérieure de la tête de piston 5. Le ressort 4 se comprime sous cette poussée et le piston 3 descend dans le corps 2. Le corps de piston 6 coulisse dans le cylindre de sortie 22.

Le corps de piston 6 descend jusqu'à ce que l'extrémité inférieure du pied de piston 7 entre en contact avec la première came 9. Dans ce cas, la position du piston 3 dans le corps 2 est fixée et le gaz pénètre par les orifices de sortie 220.

Pendant que le remplissage du réservoir s'effectue, le flotteur 8 repose à la surface du carburant dont le niveau monte. Le flotteur 8 va donc monter également et entraîner la rotation de la première came 9 autour de l'axe O.

Comme représenté à la figure 3, quand le flotteur 8 atteint une position extrême prédéterminée, correspondant de manière générale à un taux de remplissage de l'ordre de 80% du réservoir, l'extrémité du pied de piston quitte le contact de la première came 9.

Le pied de piston 7 n'est donc plus en butée contre la première came 9 et le piston 3, toujours sous la poussée du gaz de remplissage, descend à nouveau dans le corps 2, jusqu'à ce que l'extrémité inférieure du pied de piston 7 entre en contact avec la seconde came 10. Cette position correspond à la rencontre des deux chanfreins 52 et 210 qui forment alors une liaison cône-cône, obturant le passage entre la chambre de passage 21 et le cylindre de sortie 22.

La pression que le gaz de remplissage continue d'exercer sur la partie supérieure de la tête de piston 5 va contribuer à renforcer la liaison cône-cône entre les deux chanfreins 52 et 210. Le gaz ne trouvant plus de chemin vers l'intérieur du réservoir, l'utilisateur va ressentir, dans les outils de remplissage, une secousse qui lui permettra de savoir que le réservoir est plein. Néanmoins, cette secousse ayant lieu pour un taux de remplissage de 80 % environ, il subsiste une marge de sécurité pour l'expansion du gaz à l'intérieur du réservoir.

Dans cet exemple de réalisation, à cause de la dépression qui se crée dans le réservoir lorsque l'on utilise du carburant et pour que le piston 3 ne reste pas définitivement en butée sur le chanfrein 210, l'obturation du passage entre la chambre de passage 21 et le cylindre de sortie 22 n'est pas complète. En effet, les inclinaisons des chanfreins 52 et 210 sont telles qu'il subsiste une possibilité de passage du gaz au travers de la liaison cône-cône.

Le courant de fuite ainsi créé entre l'extérieur et l'intérieur du réservoir, pour éviter le bouchage du dispositif d'admission, est de l'ordre de 2 l/min. au maximum.

Le problème que pose le dispositif précédemment décrit, selon l'état de la technique est que le courant de fuite, transitant depuis l'intérieur vers l'extérieur du réservoir, et qui est souhaitable pour éviter le bouchage dudit dispositif, peut également s'effectuer dans le sens contraire, c'est-à-dire depuis l'extérieur du réservoir vers l'intérieur du réservoir.

De cette manière, une fois passée la secousse correspondant à la venue en butée du chanfrein 52 contre le chanfrein 210, l'utilisateur peut forcer le remplissage de son réservoir. En effet, si l'utilisateur continue le remplissage, le gaz passera finalement entre les chanfreins 52 et 210, pour remplir le réservoir à raison d'environ 2 1/min.

Avec le dispositif de remplissage selon l'état de la technique, le réservoir peut donc être rempli en totalité, ce qui ne laisse plus une marge de sécurité pour l'expansion du gaz à l'intérieur dudit réservoir et multiplie donc les risques associés.

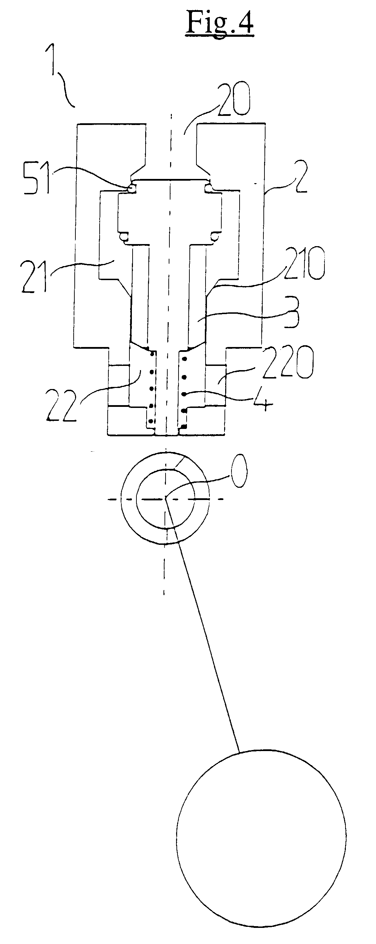

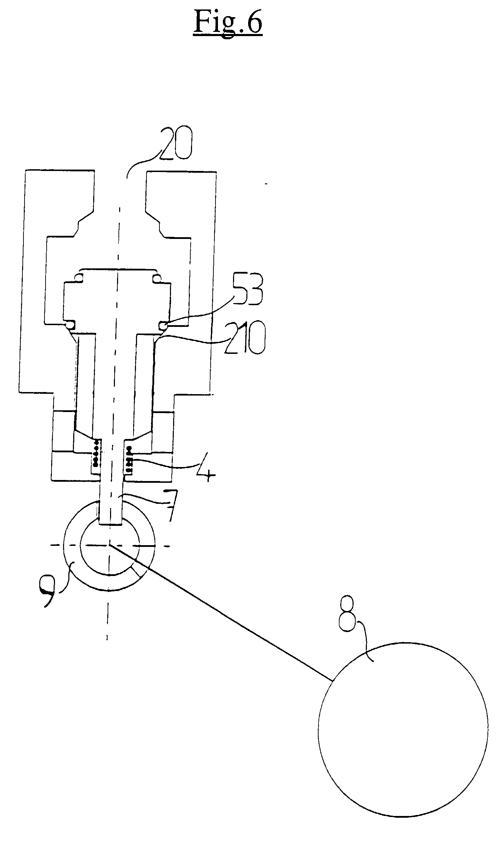

Le dispositif de remplissage selon l'invention, représenté dans les figures 4 à 8, permet de résoudre ce problème.

La figure 4 représente un dispositif de remplissage selon un exemple de réalisation de l'invention, dans une position initiale correspondant au roulage du véhicule.

Ce dispositif comporte un corps 2 dans lequel un piston 3 est mobile selon un axe vertical, ledit piston 3 coopérant avec un ressort de rappel 4, lui-même situé à l'intérieur du corps 2.

De la même manière que précédemment décrit, le corps 2 possède un orifice d'admission 20 débouchant dans une chambre de passage 21, ladite chambre de passage 21 se prolongeant par un cylindre de sortie 22. Le cylindre de sortie 22 possède des orifices de sortie 220 à l'intérieur d'un réservoir, non représenté.

Le piston 3 se compose également de trois parties qui sont, du haut vers le bas, une tête de piston 5, un corps de piston 6 et un pied de piston 7. Le corps de piston 6 comporte des saignées 60 pour permettre le passage du carburant, en phase de remplissage du réservoir.

La partie supérieure de la tête de piston 5 comporte un rebord annulaire emprisonnant un joint torique 51. Ce joint torique 51 est destiné à venir s'appuyer contre les bords inférieurs de l'orifice d'admission 20, en haut de la chambre de passage 21, lors du roulage du véhicule, comme représenté à la figure 4.

La partie inférieure de la tête de piston 5 comporte un rebord annulaire emprisonnant un joint torique 53. Dans l'exemple de réalisation représenté, ce joint torique 3 est en matière élastique, tel que du caoutchouc. Ce joint torique 53 est destiné à venir en butée contre le chanfrein 210 réalisé dans la partie inférieure de la chambre de passage 21.

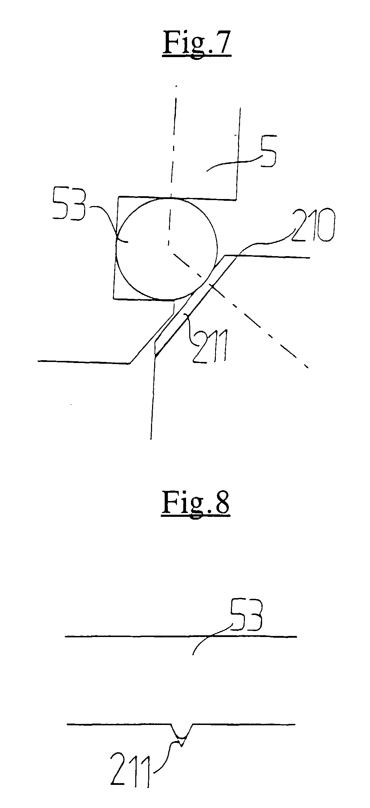

Tel que représenté à la figure 7, le chanfrein 210 possède une rainure 211 dans laquelle le joint torique 53 peut fluer sous l'effet de la pression d'un gaz carburant.

Comme précédemment décrit et selon l'exemple de réalisation représenté, le dispositif de remplissage selon l'invention possède des moyens limiteurs de remplissage sous la forme d'un flotteur 8 et d'une seule came 9, à titre d'exemple en forme de demi-couronne.

Le fonctionnement du dispositif de remplissage conforme à l'invention va maintenant être explicité.

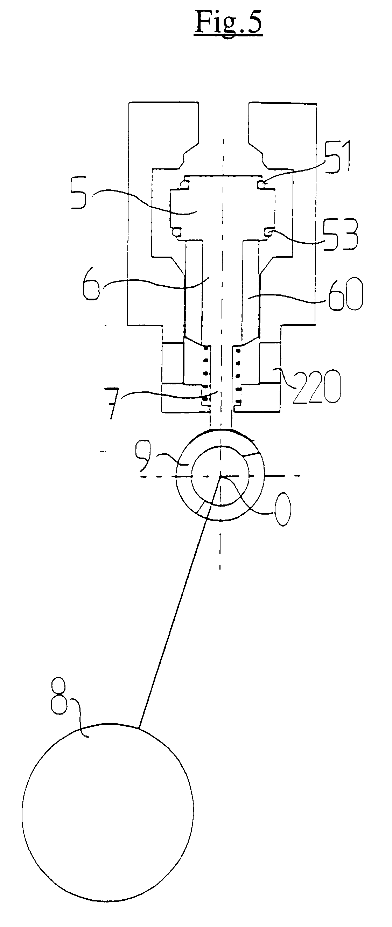

La figure 5 représente le dispositif de remplissage conforme à l'invention dans une phase de remplissage du réservoir.

L'arrivée du gaz carburant par l'orifice d'admission 20 exerce une pression sur la partie supérieure de la tête de piston 5. Le ressort 4 se comprime donc et le piston 3 descend dans le corps 2. Le corps de piston 6 coulisse dans le cylindre de sortie 22.

Le corps de piston 6 descend jusqu'à ce que l'extrémité inférieure du pied de piston 7 entre en contact avec la came 9. Dans ce cas, la position du piston 3 dans le corps 2 est fixée et le gaz pénètre dans le réservoir par les orifices de sortie 220.

Pendant que le remplissage du réservoir s'effectue, le flotteur 8 repose à la surface du carburant dont le niveau monte. Le flotteur 8 va donc monter également et entraîner la rotation de la came 9 autour de l'axe O.

Quand le flotteur 8 atteint une position extrême prédéterminée, correspondant à un taux de remplissage de l'ordre de 80% du réservoir, l'extrémité du pied de piston quitte le contact de la came 9. Le pied de piston 7 n'est donc plus en butée contre la première came 9 et le piston 3, toujours sous la poussée du gaz de remplissage, descend à nouveau dans le corps 2, jusqu'à ce que la partie inférieure de la tête de piston 5 entre en contact avec la partie inférieure de la chambre de remplissage 21.

A ce moment, comme représenté à la figure 8, le joint torique 53, sous l'effet de la pression du gaz de remplissage, va s'écraser contre le chanfrein 210 et fluer dans les rainures 211 de ce dernier. La liaison entre la partie inférieure de la tête de piston 5 et la partie supérieure de la chambre de passage 21 est donc totalement étanche.

Le gaz de remplissage ne pouvant plus circuler vers l'intérieur du réservoir, l'utilisateur ressent une secousse qui lui indique le plein du réservoir.

Avec le dispositif de remplissage selon l'invention, si l'utilisateur essaie de forcer le remplissage de son réservoir, la pression continue du gaz de remplissage ne fera qu'écraser plus fortement le joint torique 53. Il n'y aura pas, comme dans les dispositifs de remplissage selon l'état de la technique, possibilité de traverser la liaison entre la partie inférieure de la tête de piston 5 et la partie inférieure de la chambre de passage 21.

En effet, tant que le joint torique 53 reste à l'intérieur des rainures 211, le gaz ne peut plus entrer à l'intérieur du réservoir, rendant tout sur-remplissage impossible.

Le joint torique 5 étant en matière élastique, une relaxation de ce dernier s'opère au bout de quelques instants. Le joint torique 53 reprend alors sa position de départ tel que représenté figure 7. Le joint torique 53 se dégage ainsi des rainures 211 du chanfrein 210.

Ceci permet d'éviter le phénomène de bouchage précédemment décrit. En effet, le joint torique 53 libérant les rainures 211, un courant de fuite peut s'établir depuis l'intérieur du réservoir vers le milieu extérieur, au travers desdites rainures 211. A titre d'exemple ce courant de fuite peut être de l'ordre de 0,5 l/mn.

Cependant, toute reprise de l'alimentation en gaz carburant, entraînant une augmentation de la pression sur la partie supérieure de la tête de piston 5, aura pour conséquence la descente du piston 3 dans le cylindre de sortie 22. Cette descente va entraîner à nouveau l'écrasement du joint torique 53 qui occupera les rainures 211, rendant à nouveau la liaison entre la partie inférieure de la tête de piston 5 et la paroi inférieure de la chambre de passage étanche.

L'utilisateur qui aurait ainsi tenté de forcer le remplissage du réservoir ressentira une nouvelle secousse, le passage du gaz vers l'intérieur du réservoir sera impossible.

Le dispositif de remplissage selon l'invention permet donc de fiabiliser l'arrêt du remplissage du réservoir pour un taux de remplissage en carburant qui laisse encore une marge d'expansion à ce dernier.

Le dispositif de remplissage selon l'invention permet un courant de fuite, de l'intérieur du réservoir vers le milieu extérieur, tout en empêchant tout courant de gaz du milieu extérieur vers l'intérieur du réservoir, quand le niveau haut de remplissage dudit réservoir est atteint.

Le dispositif de remplissage selon l'invention est donc particulièrement sûr puisqu'il empêche tout sur-remplissage du réservoir et limite grandement les risques de déformation, voire d'explosion, en cas d'expansion du carburant, particulièrement lorsque ce carburant est un gaz.

Le dispositif de remplissage d'un réservoir de véhicule automobile selon l'invention ne se limite pas à l'exemple de réalisation précédemment décrit mais englobe tout dispositif de remplissage d'un réservoir comportant un corps de passage, des moyens d'admission et d'arrêt ainsi que des moyens mobiles limiteurs de remplissage, où lesdits moyens d'admission et d'arrêt comportent un moyen élastique destiné à se déformer pour occuper un moyen de réception, situé dans ledit corps de passage, lorsque lesdits moyens mobiles limiteurs de remplissage ont atteint une position extrême prédéterminée.

## Revendications

1. Dispositif de remplissage d'un réservoir de carburant d'un véhicule automobile comportant un corps de passage (2), des moyens d'admission et d'arrêt (3, 5, 6, 7, 51, 53) ainsi que des moyens mobiles limiteurs de remplissage (8, 9, 10), caractérisé en ce que lesdits moyens d'admission et d'arrêt (3, 5, 6, 7, 51, 53) comportent un moyen élastique (53) destiné à se déformer pour occuper un moyen de réception (211), situé dans ledit corps de passage (2), lorsque lesdits moyens mobiles limiteurs de remplissage (8, 9) ont atteint une position extrême prédéterminée.

2. Dispositif de remplissage d'un réservoir selon la revendication 1, caractérisé en ce que le corps de passage (2) comporte un orifice d'entrée (20), une chambre de passage (21), et un cylindre de sortie (22), ledit cylindre de sortie (22) possédant des orifices (220) débouchant à l'intérieur dudit réservoir.

3. Dispositif de remplissage d'un réservoir selon l'une quelconque des revendications 1 ou 2, caractérisé en ce que les moyens d'admission et d'arrêt (3, 5, 6, 7, 51, 53) comportent un piston (3) mobile à l'intérieur du corps de passage (2).

4. Dispositif de remplissage d'un réservoir selon la revendication 3, caractérisé en ce que le piston (3) comporte des saignées (60), lesdites saignées (60) étant destinées à admettre le passage du carburant vers l'intérieur dudit réservoir.

5. Dispositif de remplissage d'un réservoir selon l'une quelconque des revendications précédentes, caractérisé en ce que les moyens mobiles limiteurs de remplissage (8, 9) comportent un flotteur (8), destiné à reposer à la surface du carburant à l'intérieur dudit réservoir, et au moins une came (9), ladite came (9) étant entraînée en rotation par ledit flotteur (8) et coopérant avec les moyens d'admission et d'arrêt (3, 5, 6, 7, 51, 53).

6. Dispositif de remplissage d'un réservoir selon la revendication 5, caractérisé en ce que la came (9) possède une forme sensiblement en demi-couronne, les moyens d'admission et d'arrêt (3, 5, 6, 7, 51, 53) étant destinés à coopérer en butée contre ladite came (9).

7. Dispositif de remplissage d'un réservoir selon l'une quelconque des revendications précédentes, caractérisé en ce que le moyen élastique comporte un joint (53) en matière déformable, ledit joint (53) étant logé dans les moyens d'admission et d'arrêt (3, 5, 6, 7, 51, 53).

8. Dispositif de remplissage d'un réservoir selon l'une quelconque des revendications précédentes, caractérisé en ce que le moyen de réception comporte au moins une rainure de fuite (211), ladite rainure de fuite (211) étant destinée à admettre le passage du carburant de l'intérieur dudit réservoir vers le milieu extérieur.

9. Dispositif de remplissage selon la revendication 8, caractérisé en ce que le moyen élastique (53) s'écrase dans la rainure de fuite (211), sous la pression de remplissage, lorsque les moyens mobiles limiteurs de remplissage (8, 9) ont atteint une position prédéterminée.

10. Dispositif de remplissage d'un réservoir selon l'une quelconque des revendications précédentes, caractérisé en ce que sous la pression de remplissage, les moyens d'admission et d'arrêt (3, 5, 6, 7, 51, 53) descendent dans le corps de passage (2), en comprimant un moyen de rappel (4), destiné à repousser lesdits moyens d'admission et d'arrêt (3, 5, 6, 7, 51, 53) dans leur position initiale.
